**Europäisches Patentamt**

**European Patent Office**

**Office européen des brevets**

(11) Veröffentlichungsnummer: **0 154 725**
**A2**

# (12) EUROPÄISCHE PATENTANMELDUNG

(21) Anmeldenummer: **84116479.1**

(22) Anmeldetag: **28.12.84**

(51) Int. Cl.⁴: **G 06 F 13/36,** G 06 F 15/16

(30) Priorität: **02.03.84 DE 3407870**

(43) Veröffentlichungstag der Anmeldung: **18.09.85**
**Patentblatt 85/38**

(84) Benannte Vertragsstaaten: **AT BE CH DE FR GB IT LI LU NL SE**

(71) Anmelder: **Nixdorf Computer Aktiengesellschaft,**
**Fürstenallee 7, D-4790 Paderborn (DE)**

(72) Erfinder: **Staehle, Peter, Brede 6,**
**D-4790 Paderborn-Dahl (DE)**
Erfinder: **Unger, Manfred, Hüfferweg 16,**
**D-4790 Paderborn (DE)**
Erfinder: **Eisenack, Joachim, Fürstenweg 20,**
**D-4790 Paderborn (DE)**

(74) Vertreter: **Schaumburg & Thoenes,**
**Mauerkircherstrasse 31 Postfach 86 07 48,**
**D-8000 München 86 (DE)**

(54) **Verfahren und Schaltungsanordnung zum Einleiten einer Datenübertragungsverbindung.**

㉗ Beim Einleiten einer Datenübertragungsverbindung zwischen Datenverarbeitungseinheiten über eine Mehrfachleitungsanordnung wird durch Abgabe eines Auswahlstartsignals in sendebereiten Datenverarbeitungseinheiten eine Prioritätsermittlung veranlaßt. Außerdem veranlaßt das Auswahlstartsignal in jeder empfangsbereiten Datenverarbeitungseinheit die Abgabe einer Empfangskennung. Die sendebereiten Datenverarbeitungseinheiten prüfen dann, ob die von ihnen jeweils gewünschte Datenverarbeitungseinheit eine Empfangskennung abgegeben hat. Nur wenn diese Prüfung erfolgreich ist, geben die so ausgewählten sendebereiten Datenverarbeitungseinheiten eine Sendekennung ab, die dann zur Prioritätsermittlung nur unter diesen Datenverarbeitungseinheiten führt. Die Empfangskennung und die Sendekennungen werden jeweils über eine Leitung übertragen, die in der Auswahlphase nur einer Datenverarbeitungseinheit zugeordnet ist.

## Verfahren und Schaltungsanordnung zum Einleiten einer Datenübertragungsverbindung

Die Erfindung betrifft ein Verfahren zum Einleiten einer Datenübertragungsverbindung zwischen einer von mehreren sendebereiten Datenverarbeitungseinheiten und einer oder mehreren anzusteuernden weiteren Datenverarbeitungseinheiten über eine Mehrfachleitungsanordnung, bei dem während einer der jeweiligen Datenübertragung vorangehenden Auswahlphase ein Auswahlstartsignal auf einer Steuerleitung der Mehrfachleitungsanordnung in sendebereiten Datenverarbeitungseinheiten eine Prioritätsermittlung veranlaßt.

Ein Datenverarbeitungssystem, bei dem mehrere Datenverarbeitungseinheiten über eine Mehrfachleitungsanordnung miteinander kommunizieren können, wird auch als Mehrprozessorsystem bezeichnet. In einem Mehrprozessorsystem sind über die auch als Bus bezeichnete Mehrfachleitungsanordnung mehrere Prozessoren miteinander verbunden, die jeweils eine eigenständige Datenverarbeitungseinheit mit Zentraleinheit, Hauptspeicher, Buskoppler und Ein-Ausgabeschnittstelle bilden.

Innerhalb des Datenverarbeitungssystems ist durch einen Initialisierungsvorgang eine Verteilung der verschiedenen Datenverarbeitungsaufgaben auf die Prozessoren vorgesehen, die sich nach Gesichtspunkten wie notwendiger Grad paralleler Datenverarbeitung oder augenblicklicher Belastungszustand von Einzelprozessoren richtet. Diese Arbeitsverteilung führt im dynamischen Zustand des Datenverarbeitungssystems zu einer laufend wechselnden Arbeitsbelastung, die ihrerseits entsprechend vorzugebenden Prioritäten zu steuern ist. Dies bedeutet, daß die Prozessoren hinsichtlich ihres Zugriffs zu jeweils anderen Prozessoren über den Bus einer dynamischen Prioritätszuordnung unterliegen. Wenn ein Prozessor mit einem anderen Prozessor verbunden werden soll, so muß im Rahmen einer solchen Prioritätszuordnung geprüft werden, ob nicht ein anderer Prozessor mit höherer Priorität bevorrechtigt ist, zum Bus zuzugreifen und seinerseits eine Datenübertragungsverbindung herzustellen.

Bei der hierzu erforderlichen Prioritätsermittlung wurde bisher so vorgegangen, daß von mehreren einen Zugriffswunsch äußernden Prozessoren derjenige mit der höchsten Priorität ermittelt und erst danach seine Datenübertragungsverbindung mit einem anderen Prozessor hergestellt wurde. Dieses Prinzip ist aber mit dem Nachteil verbunden, daß die Prioritätsermittlung wiederholt werden muß, wenn der über den Bus von dem Prozessor höchster Priorität angesteuerte empfangende Prozessor nicht empfangsbereit ist und ein entsprechendes, seinen belegten Zustand kennzeichnedes Statussignal abgibt. In diesem Falle muß im Rahmen neuer Verbindungsversuche auch die Prioritätsermittlung so lange wiederholt werden, bis der gewünschte Prozessor seinen Freizustand kennzeichnet und die gewünschte Datenübertragungsverbindung hergestellt werden kann. Damit ist aber ein Zeitaufwand verbunden, der vom jeweiligen dynamischen Zustand des Betriebsablaufes des Datenverarbeitungssystems abhängt und deshalb nicht abgeschätzt werden kann. Will man diesen Zeitaufwand verringern, so können zusätzliche Leitungen innerhalb der Mehrfachleitungsanordnung vorgesehen werden, um eine Statusermittlung parallel zu der Adressierung eines gewünschten Prozessors durchzuführen. Dies ist aber unerwünscht, weil dadurch der schaltungstechnische Aufwand für das Datenverarbeitungssystem insgesamt stark erhöht wird.

Der Erfindung liegt die Aufgabe zugrunde, ein Verfahren und eine Schaltungsanordnung zum Einleiten einer Datenübertragungsverbindung mit auch im Falle eines nicht empfangsbereiten Prozessors wesentlich geringerem Zeitaufwand als bei bisher bekannten Prinzipien anzugeben.

Ein Verfahren eingangs genannter Art ist zur Lösung dieser Aufgabe erfindungsgemäß derart ausgebildet, daß von jeder empfangsbereiten Datenverarbeitungseinheit auf einer ihr zumindest innerhalb der Auswahlphase jeweils zugeordneten Leitung der Mehrfachleitungsanordnung auf den Empfang des Auswahlstartsignals hin eine ihren empfangsbereiten Zustand kennzeichnende Empfangskennung abgegeben wird, daß in jeder sendebereiten Datenverarbeitungseinheit eine Prüfung dahingehend durchgeführt wird, ob auf der der jeweils anzusteuernden Datenverarbeitungseinheit zugeordneten Leitung die Empfangskennung vorliegt,und bei Vorliegen dieser Empfangskennung auf einer dieser sendebereiten Datenverarbeitungseinheit zumindest innerhalb der Auswahlphase jeweils zugeordneten Leitung der Mehrfachleitungsanordnung eine Sendekennung abgegeben wird und daß die Prioritätsermittlung durch Sendekennungsauswertung nur in denjenigen sendebereiten Datenverarbeitungseinheiten durchgeführt wird, die eine Sendekennung abgegeben haben.

Das erfindungsgemäße Verfahren sieht also eine bestimmte Zuordnung der einzelnen Leitungen der Mehrfachleitungsanordnung (Bus) zu den einzelnen Datenverarbeitungseinheiten innerhalb der Auswahlphase vor, die der eigentlichen Datenübertragung vorangeht und in der die Datenübertragungsverbindung aufgebaut wird. Innerhalb der Auswahlphase können zwei Zeitintervalle unterschieden werden, von denen das erste zur Abgabe der Empfangskennungen von allen empfangsbereiten Datenverarbeitungseinheiten des Systems vorgesehen ist. Das zweite Intervall dient dann zur Abgabe der Sendekennungen über die fest zugeordneten Leitungen. Zuvor wird aber in jeder sendebereiten Datenverarbeitungseinheit noch im ersten Zeitintervall festgestellt, ob die von ihr gewünschte empfangende Datenverarbeitungseinheit empfangsbereit ist oder nicht, wozu lediglich ein Vergleich der auf dem Bus anstehenden Empfangskennungen mit der in der sendebereiten Datenverarbeitungseinheit vorliegenden Empfängeradresse durchzuführen ist. Dieser Vergleich ist möglich, weil die im ersten Zeitintervall vorgesehene feste Zuordnung jeweils einer Leitung der Mehrfachleitungsanordnung zu jeweils einer Datenverarbeitungseinheit z. B. im Rahmen einer Zuordnungstabelle verfügbar ist, welche beim Initialisieren des Systems erstellt wurde und im Speicher jeder Datenverarbeitungseinheit vorhanden sein kann. Wenn dann im zweiten Zeitintervall die Sendekennungen derjenigen Datenverarbeitungseinheiten auf dem Bus anstehen, die die von ihnen gewünschten Datenverarbeitungseinheiten empfangsbereit gefunden haben, so kann in jeder dieser sendebereiten Datenverarbeitungseinheiten dezentral die Prioritätsermittlung in sehr einfacher Weise auch durch einen Vergleich der auf dem Bus erscheinenden Sendekennungen mit einer Prioritätstabelle durchgeführt werden, die ähnlich wie die Zuordnungstabelle in jeder Datenverarbeitungseinheit vorhanden ist. Stellt sich bei diesem Vergleich heraus, daß die jeweilige den Vergleich durchführende Datenverarbeitungseinheit eine geringere Priorität hat als eine andere, so wird ihre Abschaltung von der Mehrfachleitungsanordnung veranlaßt und die von ihr gewünschte Datenübertragungsverbindung zu einem späteren Zeitpunkt erneut eingeleitet.

Wesentlicher Vorteil eines Verfahrens nach der Erfindung ist die Möglichkeit, auch im Rahmen der Prioritätsermittlung Schritt halten zu können mit der technologischen Entwicklung der Mehrprozessorsysteme, denn die Prioritätsermittlung erfolgt nicht programmgesteuert in logischen Einzelschritten, sondern bereits innerhalb der Auswahlphase unter Benutzung durch Schaltungstechnik nur von empfangsbereiten Prozessoren bereitgestellter Signale. Da hierbei keine Auswertung in mehreren Adressierungs- und Verifizierungsschritten erfolgt, können für die Prioritätsermittlung und damit für die Auswahlphase die Vorteile schneller Schaltungstechnik voll genutzt werden und die Auswahlphase insgesamt kürzestmöglich gestaltet werden. Da im Rahmen eines Verfahrensablaufs nach der Erfindung zuerst die empfangsbereiten Datenverarbeitungseinheiten ihre Empfangskennungen auf die Mehrfachleitung geben, wird durch den in beschriebener Weise in jeder sendenden Datenverarbeitungseinheit durchgeführten Vergleich dieser Empfangskennungen mit der jeweils gewünschten Empfängeradresse eine selbsttätige Vorauswahl nur derjenigen empfangenden Datenverarbeitungseinheiten erreicht, die für den Aufbau einer Datenübertragungsverbindung überhaupt von Interesse sind. Dadurch ist kein besonderer Auswahlschritt bzw. Zeitaufwand erforderlich, um aus mehreren Datenverarbeitungseinheiten zunächst nur diejenigen auszuwählen, die empfangsbereit sind. Zur Prioritätsermittlung ist nur ein einziger Auswerteschritt erforderlich, weil hierbei nur kommunikationsfähige Prozessoren beteiligt sind und in jedem Falle diejenige eingeleitete Datenübertragungsverbindung bestehen bleibt, der die höchste Priorität zugeordnet ist. Zur Übermittlung der Kriterien, welche diese Prioritätsermittlung steuern, sind keine zusätzlichen Leitungen des Mehrfachleitungssystems erforderlich, weil hierzu die normalen Datenübertragungsleitungen benutzt werden können, die nur in der Auswahlphase in der beschriebenen festen Zuordnung zu jeder Datenverarbeitungseinheit bzw. zu jedem Prozessor betrieben werden müssen.

Die Erfindung wird im folgenden in Verbindung mit einer Schaltungsanordnung zu ihrer Durchführung anhand der Figuren beschrieben. Es zeigen:

Fig. 1 eine allgemeine Übersicht über ein Datenverarbeitungssystem in Form eines Mehrprozessorsystems,

Fig. 2 die wichtigsten Funktionseinheiten eines Prozessormoduls innerhalb des in Fig. 1 gezeigten Mehrprozessorsystems,

Fig. 3 eine Buskopplungsschaltung innerhalb eines Prozessormoduls, die die Durchführung des erfindungsgemäßen Verfahrens ermöglicht,und

Fig. 4 ein Zeitdiagramm für den Ablauf einer Auswahlphase.

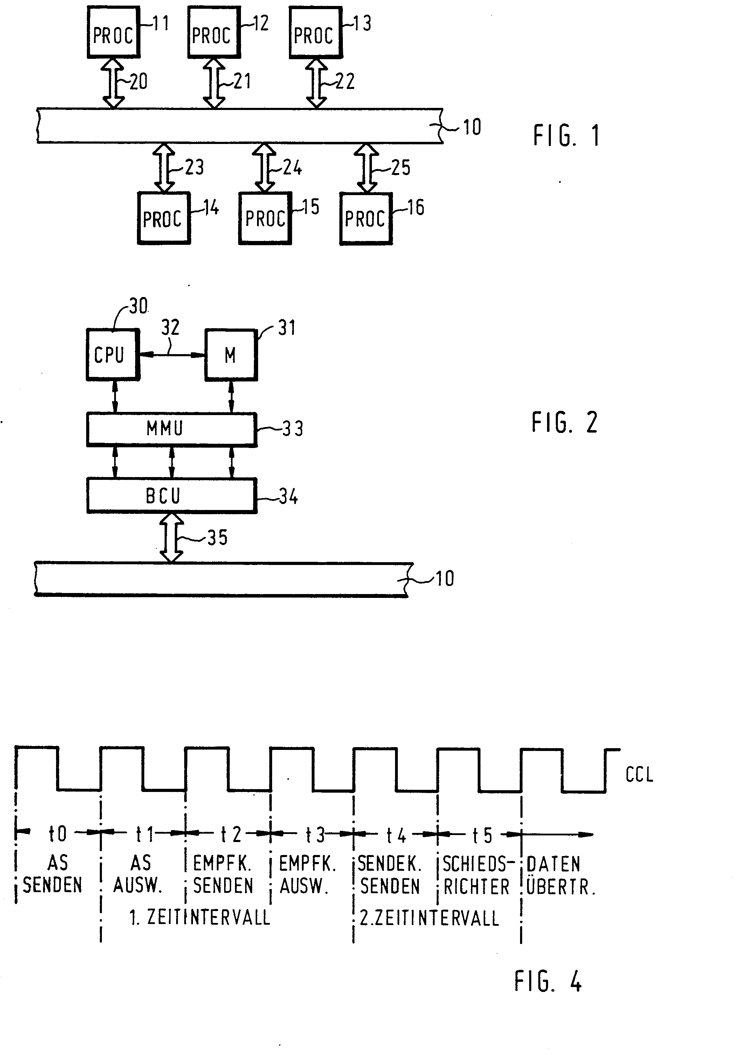

In Fig. 1 ist ein Datenverarbeitungssystem dargestellt, bei dem an eine im folgenden als Bus bezeichnete Mehrfachleitungsanordnung 10 als Datenverarbeitungseinheiten mehrere Prozessoren 11 bis 16 über jeweils eine Buskoppelleitungsanordnung 20 bis 25 angeschlossen sind. Im dargestellten Ausführungsbeispiel sind sechs Prozessoren 11 bis 16 vorgesehen, die im Rahmen des Gesamtsystems übereinstimmende oder unterschiedliche Aufgaben übernehmen können, wie dies für Mehrprozessorsysteme dieser Art an sich bekannt ist. Im Rahmen der Datenverarbeitung können jeweils zwei Prozessoren über den Bus 10 miteinander kommunizieren, wozu der jeweiligen Datenübertragungsverbindung eine Auswahlphase vorangeht. Diese Auswahlphase wird von einem einen Verbindungswunsch äußernden Prozessor in noch zu beschreibender Weise eingeleitet, wobei geprüft wird, ob der gewünschte Prozessor empfangsbereit ist oder nicht. Die nicht vorhandene Empfangsbereitschaft kann beispielsweise ihren Grund in einer noch bestehenden Datenübertragungsverbindung haben, durch die der Bus 10 belegt ist, oder in dem gewünschten Prozessor können interne Datenverarbeitungsvorgänge abgearbeitet werden, die eine neue Daten-

Übertragungsverbindung verhindern. Da die Prozessoren 11 bis 16 bei variabler Belastungsverteilung mit unterschiedlichen Prioritäten eingesetzt werden müssen, ist zusätzlich zu einem Adressierungsvorgang zwecks Verbindungsaufbau auch eine Prioritätsermittlung durchzuführen, wie sie weiter oben bereits allgemein erläutert wurde.

Wie noch erkennbar wird, erübrigt sich bei Anwendung des erfindungsgemäßen Verfahrens eine zentrale Prioritätsermittlung während des Verbindungsaufbaus, denn diese wird dezentral innerhalb des jeweils einen Verbindungswunsch äußernden Prozessors durchgeführt.

Fig. 2 zeigt die wichtigsten Funktionseinheiten eines mit dem Bus 10 verbundenen Prozessors. Dieser enthält eine Zentraleinheit 30 (CPU), der ein Hauptspeicher 31 (M) über eine interne Verbindung 32 zugeordnet ist, welche eine nicht dargestellte Hauptspeichersteuerung enthält. Die Zentraleinheit 30 und der Hauptspeicher 31 stehen ihrerseits mit einer Speicherorganisationseinheit 33 (MMU) in Verbindung, die gleichfalls Aufgaben der Hauptspeichersteuerung übernehmen kann und über die eine interne Datenverarbeitung innerhalb des Prozessors durchgeführt werden kann. Die hierzu notwendigen, über den Bus 10 empfangenen Signale sowie über den Bus 10 abzugebende Signale werden von einer Buskoppelschaltung 34 (BCU) gesteuert, die über eine Buskoppelleitungsanordnung 35 mit dem Bus 10 verbunden ist.

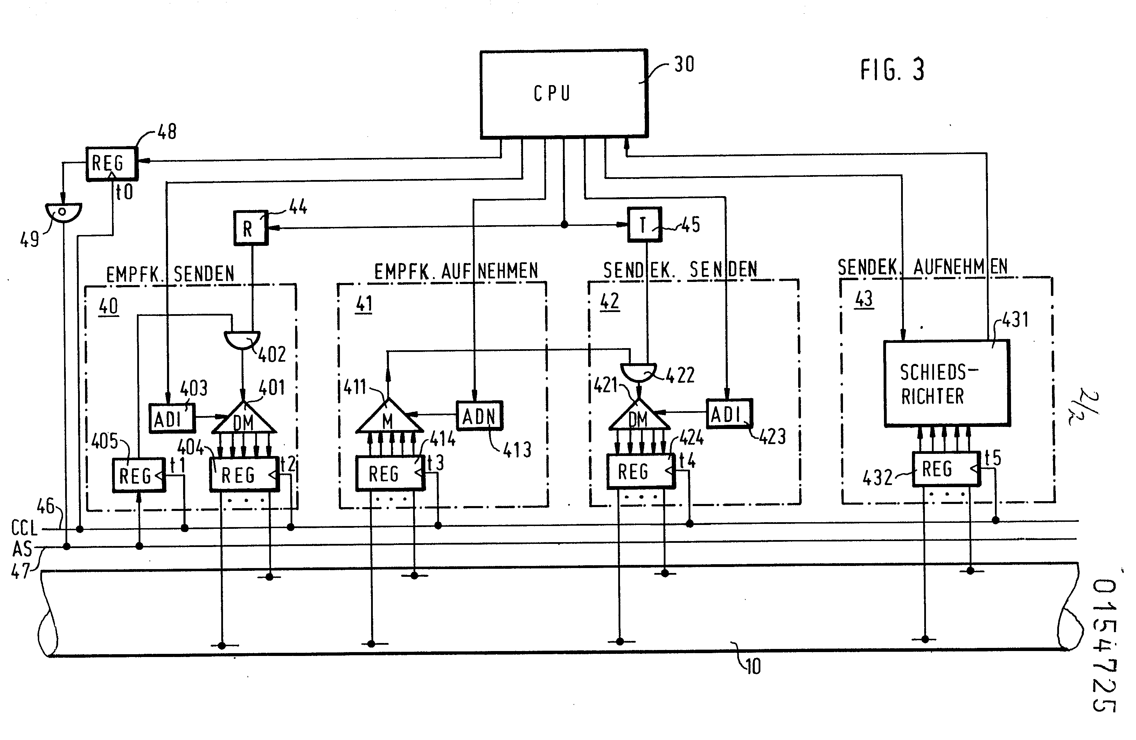

In der Buskoppelschaltung 34 sind die Funktionseinheiten enthalten, mit denen während der Auswahlphase ein Verbindungsaufbau zwischen zwei oder mehreren Prozessoren eingeleitet wird und die dezentrale Prioritätsermittlung erfolgt. Diese Funktionseinheiten werden anhand der Fig. 3 erläutert.

Fig. 3 zeigt eine Anordnung von vier Einzelschaltungen 40, 41, 42 und 43, die die wesentlichen Funktionseinheiten zur Einleitung einer Datenübertragungsverbindung darstellen und durch die Zentraleinheit 30 gesteuert werden. Die Schaltung 40 ist eine Empfangskennungs-Sendeschaltung und enthält als wesentlichen Bestandteil einen Demultiplexer 401, dessen Eingang mit einem UND-Glied 402 verbunden ist. Der Demultiplexer 401 kann z. B. eine integrierte Schaltung des Typs 74138 sein. Seine Auswahleingänge werden durch ein Adressregister 403 gesteuert.

Die Ausgänge des Demultiplexers 401 sind mit einem Ausgangsregister 404 verbunden, dessen Registerausgänge mit jeweils einer Leitung des Bus 10 verbunden sind. Es ist ferner ein Register 405 vorgesehen, dessen Ausgang mit einem Eingang des UND-Gliedes 402 verbunden ist. Der zweite Eingang des UND-Gliedes 402 ist mit einer Empfangsbereitschaftsschaltung 44 (R) verbunden, die die Empfangsbereitschaft des Prozessors signalisiert und durch die Zentraleinheit 30 entsprechend gesteuert wird. Die Sendebereitschaft wird durch eine Sendebereitschaftsschaltung 45 (T) signalisiert, die gleichfalls durch die Zentraleinheit 30 gesteuert wird. Die Register 404 und 405 werden durch den zentralen Takt CCL des Gesamtsystems zu unterschiedlichen Zeiten t1 und t2 aktiviert und sind mit ihren Steuereingängen entsprechend an die Zentraltaktleitung 46 angeschlossen. Das Register 405 dient zur Aufnahme eines Auswahlstartsignals AS über eine allen Prozessoren gemeinsame Auswahlstartsignalleitung 47. An diese Auswahlstartsignalleitung ist der Ausgang eines Registers 48 angeschlossen, welches das Auswahlstartsignal aus der Zentraleinheit 30 erhält, zu einer Zeit t0 über die Zentraltaktleitung 46 aktiviert wird und das Auswahlstartsignal dann über eine Open-Collector-Schaltung 49

0154725

auf die Auswahlstartsignalleitung 47 abgibt.

Das Adressregister 403 dient zur Aufnahme einer Adresse ADI, die dem Prozessor zugeordnet ist, welcher die in Fig. 3 gezeigte Schaltung enthält. Es handelt sich also um die eigene interne Prozessoradresse, die dem Adressregister 403 von der Zentraleinheit 30 zugeführt wird und so je nach Lage des Prozessors im System auch geändert werden kann.

Die Empfangskennungs-Sendeschaltung 40 kann eine Empfangskennung auf die ihr zugeordnete Leitung des Bus 10 geben, sobald die Empfangsbereitschaftsschaltung 44 die Empfangsbereitschaft des Prozessors bei entsprechender Steuerung durch die Zentraleinheit 30 signalisiert und auf der Auswahlstartsignalleitung 47 ein Auswahlstartsignal zur Zeit t0 aufgetreten ist, welches von einem sendebereiten Prozessor auf die Auswahlstartsignalleitung 47 gegeben wurde. Dieses Auswahlstartsignal wird in das Register 405 übernommen, welches zur Zeit t1 das UND-Glied 402 aufsteuert und ein die Sendebereitschaft anzeigendes Signal auf den Demultiplexer 401 gibt. Dieser gibt an seinem durch die eigene Prozessoradresse ADI adressierten Ausgang eine

Empfangskennung an eine Stelle des Ausgangsregisters 404 ab, deren Ausgangsleitung mit einer Leitung des Bus 10 verbunden ist, die durch die beschriebene Funktion des Demultiplexers 401 der in Fig. 3 gezeigten Schaltung und damit dem entsprechenden Prozessor fest zugeordnet ist. Die Übergabe der Empfangskennung auf den Bus 10 erfolgt zur Zeit t2.

Die Schaltung 41 ist eine Empfangskennungs-Aufnahmeschaltung und enthält einen Multiplexer 411, der z. B. eine integrierte Schaltung des Typs 74151 sein kann und

eine    Umschaltfunktion enthält, die durch ein Adressregister 413 gesteuert wird, welches seinerseits von der Zentraleinheit 30 gesteuert wird. Das Adressregister 413 dient zur Aufnahme der Adresse ADN eines Prozessors, mit dem eine Datenübertragungsverbindung herzustellen ist, d. h. der von dem der Schaltung nach Fig. 3 zugeordneten Prozessor gewünscht wird. Der Multiplexer 411 ist mit den Ausgängen    eines Eingangsregisters 414 verbunden,    dessen Eingänge mit jeweils einer Leitung des Bus 10 verbunden sind.

Wenn auf den einzelnen Leitungen des Bus 10 Empfangskennungen vorliegen, so werden diese in das Eingangsregister 414 übernommen und zur Zeit t3 an den Multiplexer 411 übergeben. Diejenige Empfangskennung, welche von dem gewünschten Prozessor mit der Adresse ADN stammt, wird durch den Multiplexer 411 infolge der beschriebenen Umschaltfunktion weitergeleitet an die Schaltung 42, die eine Sendekennungs-Sendeschaltung ist.

Diese Sendekennungs-Sendeschaltung ist ähnlich der Empfangskennungs-Sendeschaltung 40 aufgebaut und enthält ein UND-Glied 422, welches mit einem Demultiplexer 421 verbunden ist, der eine integrierte Schaltung des Typs 74138 sein kann und eine    Umschaltfunktion enthält, die durch ein Adressregister 423 gesteuert wird, welches die interne Prozessoradresse ADI des Prozessors aufnimmt, welcher der in Fig. 3 gezeigten Schaltung zugeordnet ist. Dem Demultiplexer 421 ist ein Ausgangsregister 424 nachgeschaltet, dessen Ausgangsleitungen mit jeweils einer Leitung des Bus 10 verbunden sind und welches zur Zeit t4 aktiviert wird. Das UND-Glied 422 wird durch das beschriebene Ausgangssignal des Multiplexers 411 der Empfangskennungs-Aufnahmeschaltung 41 und durch das Sendebereitschaftssignal aus der Sendebereitschaftsschaltung 45 angesteuert. Dies bedeutet, daß bei Aufnahme einer Empfangskennung eines gewünschten Prozessors mit der Empfangskennungs-Aufnahmeschaltung 41 zur Zeit t3 und bei sendebereitem Zustand des der Schaltung nach Fig. 3 zugeordneten Prozessors eine Sendekennung auf diejenige Leitung des Bus 10 zur Zeit t4 geleitet wird, die dem die Schaltung nach Fig. 3 enthaltenden Prozessor fest zugeordnet ist.

Die Schaltung 43 ist eine Sendekennungs-Aufnahmeschaltung und enthält eine Prioritätsermittlungsschaltung 431, die auch als Schiedsrichter bezeichnet wird und über ein Eingangsregister 432 zur Zeit t5 angesteuert wird. Das Eingangsregister 432 ist mit seinen Eingangsleitungen an jeweils eine Leitung des Bus 10 angeschlossen und nimmt die Sendekennungen auf, welche insgesamt auf dem Bus 10 erscheinen. Zur Zeit t5 werden diese Sendekennungen an den Schiedsrichter 431 abgegeben, der dann unter Steuerung durch eine Prioritätsvorschrift, die allen Zentraleinheiten des Datenübertragungssystems gemeinsam ist, die Priorität des der Schaltung nach Fig. 3 zugeordneten Prozessors ermittelt, um festzustellen, ob sich dieser Prozessor vom Bus 10 infolge höherer Priorität eines anderen Prozessors abschalten muß oder nicht, was dann durch die Zentraleinheit 30 erfolgt.

Wenn alle Prozessoren bzw. Datenverarbeitungseinheiten eines Systems der in Fig. 1 gezeigten Art die Schaltungen nach Fig. 3 enthalten, so kann die Einleitung einer Datenübertragungsverbindung zwischen zwei oder mehr Prozessoren nach dem in Fig. 4 gezeigten Zeitschema ablaufen. Dieses zeigt den Zentraltakt CCL des Datenübertragungssystems mit den einzelnen Taktintervallen t0 bis t5. Während des Taktintervalls t0 wird von einem sendebereiten Prozessor, der eine Verbindung mit einem anderen Prozessor wünscht, das Auswahlstartsignal AS auf die Auswahlstartsignalleitung 47 geleitet. Dieses Auswahlstartsignal wird in der Empfangskennungs-Sendeschaltung 40 aller Prozessoren mit dem Register 405 während des Taktintervalls t1 aufgenommen und in beschriebener Weise ausgewertet. In den empfangsbereiten Prozessoren löst dies im Taktintervall t2 die Abgabe der Empfangskennung auf jeweils derjenigen Leitung des Bus 10 aus, die dem jeweiligen Prozessor fest zugeordnet ist, so daß die so abgegebenen Empfangskennungen der empfangsbereiten Prozessoren in die Empfangsregister 414 der sendebereiten Prozessoren übernommen werden.

Im Taktintervall t3 werden diese Empfangskennungen in beschriebener Weise im jeweils sendebereiten Prozessor ausgewertet um festzustellen, ob die Empfangskennung des gewünschten Prozessors vorliegt. Ist dies der Fall, so wird im Taktintervall t4 die Sendekennung auf diejenige Leitung des Bus 10 abgegeben, welche dem jeweiligen Prozessor fest zugeordnet ist. Somit erscheinen auf dem Bus 10 nur die Sendekennungen solcher Prozessoren, die kommunikationsfähig sind, d. h. die einen empfangsbereiten Prozessor adressiert haben.

Diese Sendekennungen werden im Taktintervall t5 von den Sendekennungs-Aufnahmeschaltungen 43 dieser Prozessoren übernommen, und es erfolgt in jedem Prozessor eine Prioritätsermittlung, die dazu führt, daß nur der Prozessor mit der höchsten Priorität seine Verbindung mit dem Bus 10 beibehält, während sich die anderen Prozessoren vom Bus 10 abschalten. Der mit dem Bus 10 noch verbundene Prozessor kann dann die eigentliche Datenübertragung mit dem von ihm adressierten Prozessor über den Bus 10 beginnen.

## Patentansprüche

1. Verfahren zum Einleiten einer Datenübertragungsverbindung zwischen einer von mehreren sendebereiten Datenverarbeitungseinheiten und einer oder mehreren anzusteuernden weiteren Datenverarbeitungseinheiten über eine Mehrfachleitungsanordnung, bei dem während einer der jeweiligen Datenübertragung vorangehenden Auswahlphase ein Auswahlstartsignal auf einer Steuerleitung der Mehrfachleitungsanordnung in sendebereiten Datenverarbeitungseinheiten eine Prioritätsermittlung veranlaßt, dadurch gekennzeichnet, daß von jeder empfangsbereiten Datenverarbeitungseinheit auf einer ihr zumindest innerhalb der Auswahlphase jeweils zugeordneten Leitung der Mehrfachleitungsanordnung auf den Empfang des Auswahlstartsignals hin eine ihren empfangsbereiten Zustand kennzeichnende Empfangskennung abgegeben wird, daß in jeder sendebereiten Datenverarbeitungseinheit eine Prüfung dahingehend durchgeführt wird, ob auf der der jeweils anzusteuernden Datenverarbeitungseinheit zugeordneten Leitung die Empfangskennung vorliegt, und bei Vorliegen dieser Empfangskennung auf einer dieser sendebereiten Datenverarbeitungseinheit zumindest innerhalb der Auswahlphase jeweils zugeordneten Leitung der Mehrfachleitungsanordnung eine Sendekennung abgegeben wird und daß die Prioritätsermittlung durch Sendekennungsauswertung nur in denjenigen sendebereiten Datenverarbeitungseinheiten durchgeführt wird, die eine Sendekennung abgegeben haben.

2. Verfahren nach Anspruch 1, dadurch gekennzeichnet, daß die Abgabe des Auswahlstartsignals, die Auswertung des Auswahlstartsignals, die Abgabe der Empfangskennungen, die Prüfung auf Vorliegen der Empfangskennung, die Abgabe der Sendekennungen und die Prioritätsermittlung jeweils in einem Taktintervall einer zentralen Taktsteuerung durchgeführt werden, wobei die Auswahlphase in diese aufeinander folgenden Taktintervalle unterteilt ist.

3. Verfahren nach Anspruch 1 oder 2, dadurch gekennzeichnet, daß die Empfangskennungen und die Sendekennungen über Datenleitungen der Mehrfachleitungsanordnung übertragen werden.

4. Verfahren nach einem der vorhergehenden Ansprüche, dadurch gekennzeichnet, daß die Übertragung der Empfangskennungen bzw. Sendekennungen über jeweils eine Leitung der Mehrfachleitungsanordnung erfolgt, die im jeweiligen Taktintervall nur einer Datenverarbeitungseinheit zugeordnet wird.

5. Verfahren nach Anspruch 4, dadurch gekennzeichnet, daß die Prüfung in jeder sendebereiten Datenverarbeitungseinheit, ob die Empfangskennung der jeweils anzusteuernden Datenverarbeitungseinheit vorliegt, durch Auswertung des Zustandes der Leitung der Mehrfachleitungsanordnung erfolgt, die der anzusteuernden Datenverarbeitungseinheit zugeordnet ist.

6. Verfahren nach einem der vorhergehenden Ansprüche, dadurch gekennzeichnet, daß die Empfangskennung bzw. die Sendekennung zwischengespeichert wird und durch die zentrale Taktsteuerung zur Abgabe freigegeben wird.

7. Verfahren nach einem der vorhergehenden Ansprüche, dadurch gekennzeichnet, daß die Prüfung auf Vorliegen der Empfangskennung in der jeweiligen sendebereiten Datenverarbeitungseinheit durch Vergleich der Adresse der jeweils anzusteuernden Datenverarbeitungseinheit mit den Ordnungszahlen der eine Empfangskennung führenden Leitungen der Mehrfachleitungsanordnung erfolgt.

8. Schaltungsanordnung zur Durchführung des Verfahrens nach einem der Ansprüche 1 bis 7, dadurch gekennzeichnet, daß jeder Datenverarbeitungseinheit eine Empfangskennungs-Sendeschaltung (40), die an Steuereingängen mit der das Auswahlstartsignal (AS) führenden Steuerleitung (47) und mit einer Empfangsbereitschaftsschaltung (44) verbunden ist, eine Empfangskennungs-Aufnahmeschaltung (41), die an Steuereingängen mit allen Leitungen der Mehrfachleitungsanordnung (10) verbunden ist, eine Sendekennungs-Sendeschaltung (42), die an Steuereingängen mit einer Sendebereitschaftsschaltung (45) und mit der Empfangskennungs-Aufnahmeschaltung (41) verbunden ist, und eine Sendekennungs-Aufnahmeschaltung (43), die an Steuereingängen mit allen Leitungen der Mehrfachleitungsanordnung (10) verbunden ist, zugeordnet ist.

9. Schaltungsanordnung nach Anspruch 8, dadurch gekennzeichnet, daß die Empfangskennungs-Sendeschaltung (40) bzw. die Sendekennungs-Sendeschaltung (42) einen durch eine konjunktive Verknüpfung (402, 422) gesteuerten Demultiplexer (401, 421) mit Vergleichsfunktion enthält, dessen Ausgänge mit den Ladeeingängen eines zentraltaktgesteuerten, an seinen Ausgängen mit jeweils einer Leitung der Mehrfachleitungsanordnung (10) verbundenen Ausgangsregisters (404) verbunden sind und dessen Vergleichseingang durch ein Adressregister (403, 423) mit der eigenen Adresse (ADI) der Datenverarbeitungseinheit angesteuert ist, und daß die konjunktive Verknüpfung (402) durch die Empfangsbereitschaftsschaltung (44) bzw. die Sendebereitschaftsschaltung (45) und durch ein das Auswahlstartsignal (AS) aufnehmendes zentralgesteuertes Register (405) bzw. durch die Empfangskennungs-Aufnahmeschaltung (41) angesteuert ist.

10. Schaltungsanordnung nach Anspruch 9, dadurch gekennzeichnet, daß die Empfangskennungs-Aufnahmeschaltung (41) einen durch die Ausgänge eines mit seinen Ladeeingängen jeweils an einer Leitung der Mehrfachleitungsanordnung (10) liegenden zentraltaktgesteuerten Eingangsregisters (414) gesteuerten Multiplexer (411) mit Vergleichsfunktion enthält, dessen Ausgang mit einem Eingang der konjunktiven Verknüpfung (422) der Sendekennungs-Sendeschaltung (42) verbunden ist und dessen Vergleichseingang durch ein Adressregister (423) mit der Adresse (ADN) der anzusteuernden Datenverarbeitungseinheit angesteuert ist.

11. Schaltungsanordnung nach einem der Ansprüche 8 bis 10, dadurch gekennzeichnet, daß die Sendekennungs-Aufnahmeschaltung (43) eine Prioritätsermittlungsschaltung (43) enthält, die durch die Ausgänge eines zentraltaktgesteuerten Eingangsregisters (432) angesteuert ist, dessen Ladeeingänge jeweils an einer Leitung der Mehrfachleitungsanordnung (10) liegen.

12. Schaltungsanordnung nach einem der Ansprüche 8 bis 11, dadurch gekennzeichnet, daß die jeder Datenverarbeitungseinheit zugeordneten Schaltungen (40, 41, 42, 43) in einer die Datenverarbeitungseinheit mit der Mehrfachleitungsanordnung (10) verbindenden Buskoppelschaltung (34) vorgesehen sind.

FIG. 1

FIG. 2

| | | | | | | |
|---|---|---|---|---|---|---|
| t0 | t1 | t2 | t3 | t4 | t5 | |
| AS SENDEN | AS AUSW. | EMPFK. SENDEN | EMPFK. AUSW. | SENDEK. SENDEN | SCHIEDS-RICHTER | DATEN ÜBERTR. |
| | 1. ZEITINTERVALL | | | 2.ZEITINTERVALL | | |

FIG. 4

FIG. 3